# EUROPÄISCHE PATENTSCHRIFT

(11) **EP 0 355 365 B1**
(45) Veröffentlichungstag und Bekanntmachung des Hinweises auf die Patenterteilung: **12.01.1994**
(21) Anmeldenummer: 89112627.8
(22) Anmeldetag: 11.07.1989
(51) Int. Cl.: A01D 34/74

(54) **Rasenmäher**
Lawn mower
Tondeuse à gazon

(30) Priorität: 17.08.1988 DE 3827925
(43) Veröffentlichungstag der Anmeldung: 28.02.1990
(60) Teilanmeldung: 92107466.2
(73) Patentinhaber: BRILL PRODUKTIONS GMBH, D-58456 Witten (DE)
(72) Erfinder:
(74) Vertreter: Patentanwälte Ruff, Beier, Schöndorf und Mütschele

(56) Entgegenhaltungen:
- EP-A- 0 047 502
- US-A- 2 776 844
- US-A- 2 926 926

## Beschreibung

Die Erfindung betrifft einen Rasenäher nach dem Oberbegriff des Patentanspruches 1.

Derartige Rasenmäher sind gemäß der US-A-2 776 844 am unteren Ende einer Motorwelle unmittelbar für die Aufnahme eines Mähwerkzeuges ausgebildet, wobei die durch die Höhenlage des Mähwerkzeuges bestimmte Schnittlänge des Rasenmähers veränderbar ist. Bei der bekannten Ausbildung sind zwei Übertragungsorgane für gesonderte Stellteile so angeordnet, daß beide unter den im Betrieb auftretenden Gewichtskräften auf Druck belastet werden. Dadurch müssen diese Übertragungsorgane, die allenfalls beim Abheben des Rasenmähers vom Boden geringfügig auf Zug belastet werden, wie auch ihre Lagerungen, sehr stark dimensioniert werden.

Die nicht vorveröffentlichte EP-A2-0 300 383, die nur für die Staaten Frankreich und Deutschland gültig ist, zeigt zwei hintereinander liegende, langgestreckte Übertragungsorgane, von denen unter den im Betrieb auftretenden Gewichtskräften nur das hintere auf Zug, das längere vordere aber auf Druck beansprucht ist. Dadurch ergeben sich ebenfalls die zuvor genannten Wirkungen.

Der Erfindung liegt die Aufgabe zugrunde, einen Rasenmäher der genannten Art zu schaffen, bei welchem die Nachteile bekannter Ausbildungen vermieden sind und mit welchem insbesondere auf einfache Weise eine Höhenverstellung des Mähwerkzeuges gewährleistet ist. Des weiteren soll bevorzugt auch erreicht werden, daß die Höhenverstellung sehr leichtgängig und ggf. zentral für alle Läufer gemeinsam vorgenommen werden kann und daß insbesondere die jeweilige Höheneinstellung ohne besondere Schwierigkeiten festgestellt werden kann.

Zur Lösung der genannten Aufgabe sind die Merkmale des Patentanspruches 1 vorgesehen. Es ist eine auf wenigstens einen Verstellträger wirkende Höhen-Verstelleinrichtung zur gegenseitigen Verstellung des Mähwerkzeug-Antriebes und mindestens eines Läufers vorgesehen, mit welcher durch Betätigen mindestens einer Einstell-Handhabe eine Höhenverstellung zweckmäßig über den gesamten, vorbestimmten Stellweg möglich ist. Es ist zwar denkbar, beispielsweise für gesonderte Laufradachsen des Fahrgestelles, gesonderte Einstell-Handhaben vorzusehen, jedoch ergibt sich eine besonders vorteilhafte Ausbildung, wenn alle Läufer bzw. Laufräder bzw. Laufachsen mit einer einzigen Einstell-Handhabe gemeinsam verstellbar sind.

Eine besonders vorteilhafte Ausbildung des Erfindungsgegenstandes besteht darin, daß eine Höhen-Anzeigeeinrichtung vorgesehen ist, welche ein Anzeigeorgan mit Höhenbezeichnungen aufweist, das in Abhängigkeit von der Höheneinstellung stehende Anzeigelagen aufweist und in der jeweiligen Anzeigelage an einer Gegenmarkierung, beispielsweise in einem fensterartigen Anzeigefeld, die zugehörige Höhenbezeichnung zeigt.

Damit dieses Anzeigeorgan nicht unmittelbar an einer Läuferlagerung, beispielsweise als Stab, raumaufwendig angebracht werden muß, sondern völlig gesondert von den Läufern beispielsweise so liegen kann, daß das Anzeigefeld unmittelbar benachbart zur Einstell-Handhabe liegt, ist das Anzeigeorgan über mindestens eine, insbesondere ausschließlich eine Getriebestufe mit der Höhen-Anzeigeeinrichtung gekuppelt. Ist dabei die Einstell-Handhabe fahrgestellfest über annähernd eine bzw. mehr als eine Umdrehung drehbar gelagert, so ist die Relativlage zwischen Einstell-Handhabe und Anzeigefeld stets die gleiche, und außerdem kann das Anzeigeorgan im wesentlichen unmittelbar von der Einstell-Handhabe angetrieben bzw. stufenweise geschaltet werden, wodurch eine sehr fein graduierte Anzeige möglich ist.

Eine sehr einfache mechanische Kupplung des Anzeigeorganes mit der Höhen-Verstelleinrichtung ergibt sich, wenn das Anzeigeorgan, vorzugsweise um eine zu dem es treibenden Stellglied, nämlich beispielsweise der Handhabe, parallele Achse drehbar gelagert ist, da dann ein einstufiges Getriebe nach Art eines Zahnrad- oder Reibradgetriebes ausreicht und ein Rotor dieses Getriebes unmittelbar das Anzeigeorgan bilden kann. Zweckmäßig ist jedoch zwischen dem Anzeigeorgan und dem es treibenden Stellglied ein Untersetzungsgetriebe, beispielsweise ein Schrittschaltwerk, derart vorgesehen, daß das Anzeigeorgan je voller Umdrehung des treibenden Stellgliedes nur einen dem Abstand zwischen zwei benachbarten Höhenbezeichnungen entsprechenden Teilschritt oder ggf. mindestens zwei solche Teilschritte ausführt. Dadurch kann der Durchmesser des Anzeigeorganes bzw. von dessen dem Mitnehmer zugeordneten Schaltkranz etwa gleich groß wie der des treibenden Stellgliedes gewählt werden.

Eine besonders vorteilhafte Weiterbildung, insbesondere eines Rasenmähers der beschriebenen Art, besteht darin, daß zwischen dem Verstellträger und der Handhabe ein mindestens einstufiges Untersetzungsgetriebe vorgesehen ist, so daß eine sehr leichtgängige Höhenverstellung erreicht werden kann. Es ist zwar denkbar, dieses Untersetzungsgetriebe als hydraulischen oder ähnlichen Antrieb auszubilden bzw. durch einen entsprechenden Arbeitszylinder zu bilden, jedoch ergibt sich eine besonders einfache Anordnung, wenn das Untersetzungsgetriebe als mechanisches Getriebe, beispielsweise als Schneckentrieb, Spindeltrieb, Hebeltrieb oder ähnliches ausgebildet ist.

Zur Erzielung besonders kompakter Abmessungen liegen die kämmend ineinandergreifenden Getriebeglieder des Untersetzungsgetriebes zweckmäßig koaxial zueinander bzw. ineinander, wie das auch im Falle eines Arbeitszylinders gegeben ist, der ein in einem zylinderartigen Getriebeglied axial bewegbares kolbenartiges Getriebeglied aufweist, wobei diese Getriebeglieder jedoch zweckmäßig mechanisch, nämlich mit einem Innen- und einem Außengewinde ineinandergreifen.

Noch kompaktere Abmessungen bei erhöhter Funktionssicherheit können erreicht werden, wenn das treibende Getriebeglied des Untersetzungsgetriebes unmittelbar an der Handhabe vorgesehen bzw. durch diese gebildet ist, wodurch das Untersetzungsgetriebe auch oberhalb des Verstellträgers bzw. der Laufradachsen oder der Laufräder geschützt angeordnet werden kann.

Die Übertragung der Stellkraft von der Einstell-Handhabe zu dem oder den Verstellträgern kann auch wenigstens teilweise durch einen Hebel- bzw. Lenkertrieb erfolgen, wobei zweckmäßig das getriebene Getriebeglied des Untersetzungsgetriebes unmittelbar über einen beispielsweise nach Art einer Kolben- bzw. Pleuelstange ausgebildeten Lenker mit dem Verstellträger verbunden sein kann. Zweckmäßig ist dieser Lenker so angeordnet, daß er unter den auftretenden Gewichtskräften auf Zug beansprucht wird und daher sehr schwach dimensioniert werden kann.

Die unmittelbare Verbindung des zuletzt genannten Lenkers bzw. des getriebenen Getriebegliedes des Untersetzungsgetriebes mit dem Verstellträger ist vor allem dann auf einfache Weise möglich, wenn der Verstellträger selbst nicht, wie auch denkbar, verschiebbar, sondern auf einer Bogenbahn, nämlich über einen Bogenwinkel von weniger als 90°, insbesondere etwa 55 bis 60°, schwenkbar gelagert ist.

Es ist zwar denkbar, den Mähwerkzeug-Antrieb, beispielsweise den Rasenmäher-Motor gegenüber dem Chassis bzw. dem Fahrgestell höhenverstellbar anzuordnen, jedoch ergibt sich eine besonders einfache Anordnung, wenn stattdessen oder ggf. zusätzlich hierzu der jeweilige Läufer bzw. alle Läufer mit der Höhen-Verstelleinrichtung gegenüber dem Fahrgestell verstellbar gelagert sind. Weist das Fahrgestell vier Laufräder auf zwei hintereinanderliegenden Radachsen auf, so wirkt die Handhabe bzw. das Untersetzungsgetriebe zweckmäßig unmittelbar nur auf eine, insbesondere die hintere, dieser Radachsen, während die vordere Radachse oder Radachsen an Verstellträgern vorgesehen sind, die über einen Übertragungstrieb mit der anderen Radachse bzw. deren zugehörigen Verstellträger verbunden sind. Dieser Übertragungstrieb kann durch einen einfachen, etwa in Fahrtrichtung des Fahrgestelles liegenden einzigen Übertragungslenker gebildet sein.

Es ist denkbar, daß das Untersetzungsgetriebe zwei oder mehr Getriebestufen mit kämmend ineinandergreifenden Getriebegliedern aufweist, jedoch wird eine einzige derartige Getriebestufe bevorzugt, die zweckmäßig über einen einstufigen Lenkertrieb mit zwei im Winkel zueinanderliegenden Lenkern mit dem zugehörigen Verstellträger antriebsverbunden ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: einen erfindungsgemäßen Rasenmäher in Seitenansicht,
- Fig. 2: einen Teil des Rasenmähers gemäß Fig. 1 in Draufsicht und vergrößerter Darstellung,
- Fig. 3: einen Ausschnitt der Fig. 1 in vergrößerter Darstellung und teilweise im Schnitt,
- Fig. 4: einen Teil der Höhen-Verstelleinrichtung sowie der Höhen-Anzeigeeinrichtung des Rasenmähers gemäß den Figuren 1 bis 3 in explodierter Darstellung und im Axialschnitt,
- Fig. 5: das Anzeigeorgan gemäß Fig. 4 in ausschnittsweiser Ansicht und
- Fig. 6: die Anzeigeplatte gemäß Fig. 4 in Draufsicht.

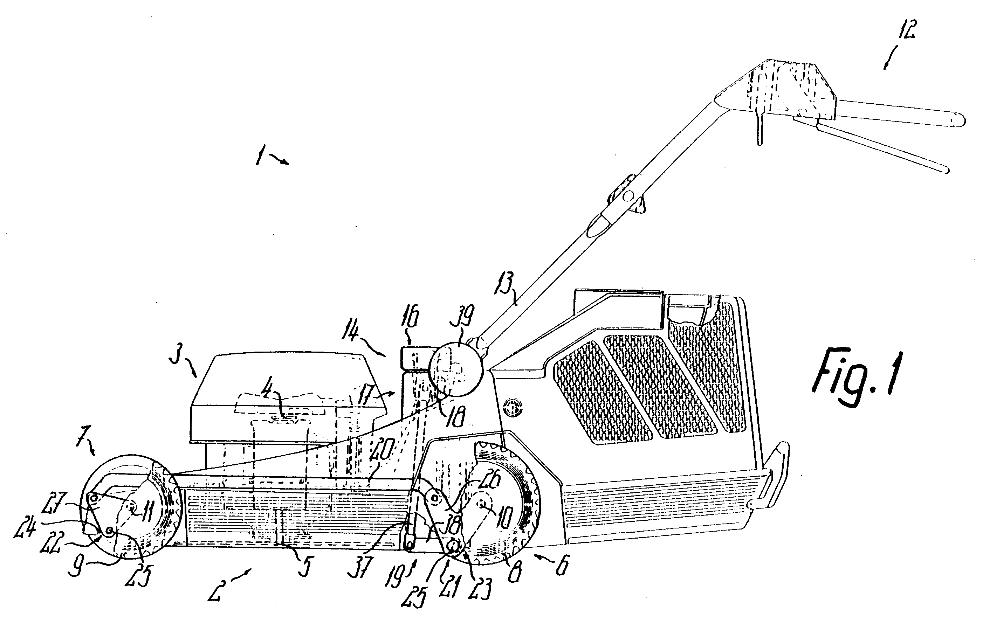

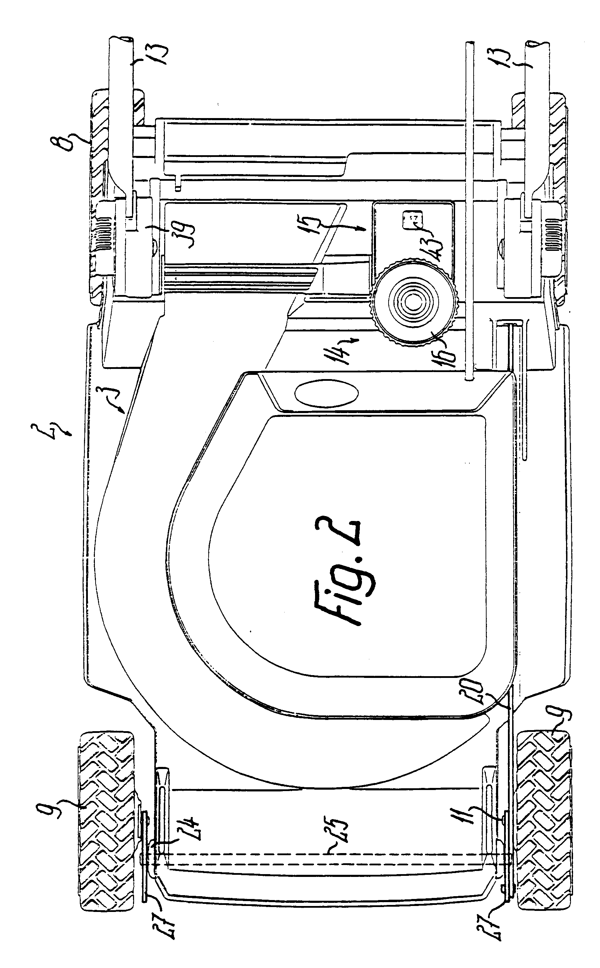

Der Rasenmäher 1 gemäß den Figuren 1 bis 6 weist ein verhältnismäßig flaches, zum hinteren Ende ansteigendes Chassis bzw. Fahrgestell 2 auf, das im wesentlichen im Zentrum mit einem Mähwerkzeug-Antrieb 3 versehen ist. Dieser weist in einem nach oben über das Fahrgestell 2 vorstehenden Gehäuse einen fest gegenüber dem Fahrgestell 2 verflanschten Rasenmäher-Motor 4 in Form beispielsweise eines Elektromotors auf, dessen nach unten vorstehende Motorwelle unmittelbar die zur Laufebene annähernd rechtwinklige Mähwelle 5 bildet. Diese ist mit einem Flansch zur auswechselbaren Befestigung des rotierend anzutreibenden Mähwerkzeuges versehen.

Zur Bodenabstützung weist das Fahrgestell 2 hintere und vordere Läufer 6, 7 auf, die durch zwei hintere, hinter dem Antrieb 3 und zwei vordere, vor dem Antrieb 3 liegende Laufräder 8, 9 bildet sind. Die hinteren und vorderen Laufräder 8, 9 liegen in seitlichen Ausschnitten des Fahrgestelles 2 jeweils paarweise in etwa gleicher Spur, so daß ihre äußeren Stirnflächen etwa in der Ebene der jeweils zugehörigen Seitenbegrenzung des Fahrgestelles 2 liegen, wobei jedoch die vorderen Laufräder 9 geringfügig kleineren Durchmesser aufweisen können und über die Oberseite des nach vorne in der Höhe abfallenden Fahrgestelles 2 vorstehen. Die hinteren Laufräder 8 sind in einer gemeinsamen Radachse 10 und die vorderen Laufräder 9 in der gemeinsamen Radachse 11 angeordnet.

Oberhalb der hinteren Laufräder 8 ist an der Oberseite und im Bereich des hinteren Endes des Fahrgestelles 2, jedoch geringfügig gegenüber der Radachse 10 nach vorne versetzt, ein bügelförmiger Fahrgriff 12 um eine zu den zueinander parallelen Laufradachsen ebenfalls parallele Griffachse schwenkbar angelenkt. Der Fahrgriff 12, der von seiner Anlenkung schräg nach hinten ansteigende Schenkel 13 aufweist, die in ihrem oberen Bereich annähernd horizontal nach hinten abgewinkelt sind, weist am hinteren Ende eine die Schenkel 13 verbindende Griffquerstange auf. Mit den unteren Enden der Schenkel 13 ist der Fahrgriff 12 oberhalb der hinteren Laufräder 8 in gesonderten seitlichen Anlenklagern 39 am Fahrgestell 2 bzw. dem mit diesem starr verbundenen Mähergehäuse gelagert. An die Rückseite des Fahrgestelles 2 kann abnehmbar ein nur in Fig. 1 erkennbarer Sammelbehälter für das Mähgut angesetzt werden, der frei nach hinten vorsteht und unterhalb der Schenkel 13 liegt.

Zur Höhenverstellung des Mähwerkzeuges gegenüber der Laufebene ist eine Höhen-Verstelleinrichtung 14 vorgesehen, mit welcher sämtliche Laufräder 8, 9 gemeinsam und im wesentlichen um gleiche Beträge gegenüber dem Fahrgestell abgesenkt bzw. angehoben werden können, wobei die jeweilige Höhenlage des Mähwerkzeuges durch eine Höhen-Anzeigeeinrichtung 15 optisch angezeigt wird. Eine Einstell-Handhabe 16 zur manuellen Betätigung der Höhen-Verstelleinrichtung 14 liegt mit zur Laufebene rechtwinkliger Drehachse an der Oberseite des Mähergehäuses hinter dem Motor 4 bzw. dessen Gehäuse, wobei die Handhabe 16 etwa in Höhe der Oberseite dieses Gehäuses vorgesehen ist und gegenüber der Mitte der Breite des Rasenmähers seitlich versetzt zwischen den Anlenklagern 39 von hinten und von der Seite leicht zugänglich liegt. Die Einstell-Handhabe 16 ist mit einer Außenweite von über 50 mm, vorzugsweise in der Größenordnung von etwa 80 mm, so groß gewählt, daß sie gerade gut in eine Handfläche paßt und daher mit einer Hand eine verhältnismäßig große Drehkraft auf sie bequem übertragen werden kann.

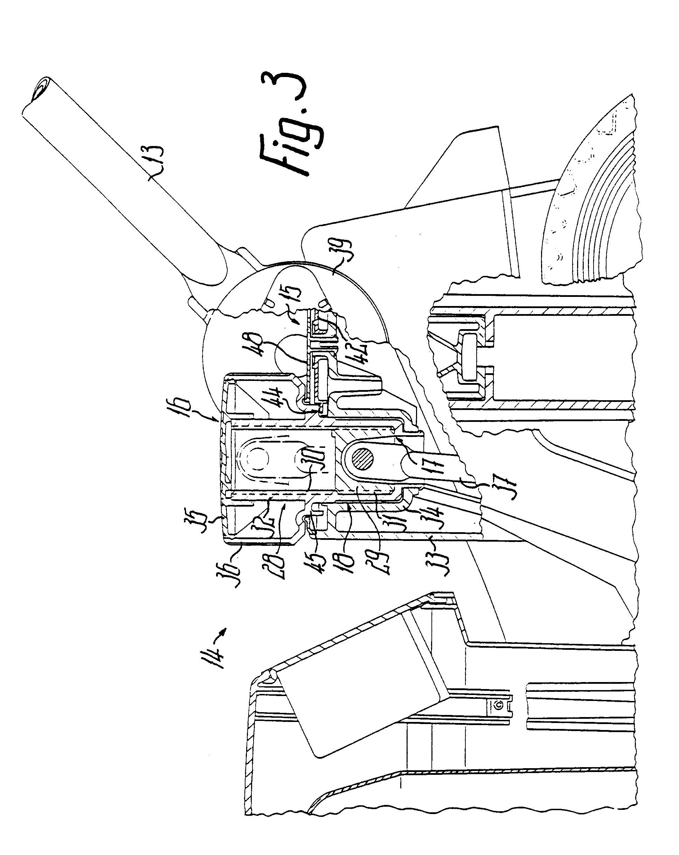

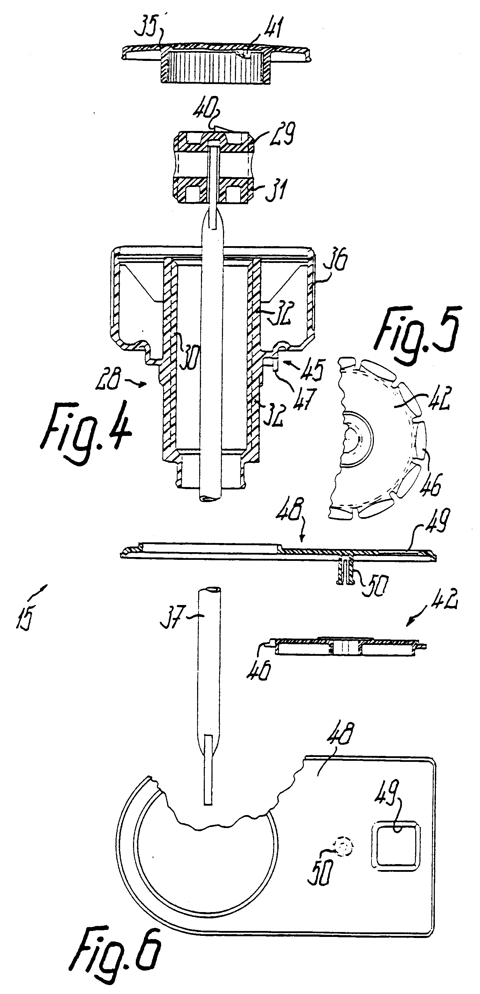

Wie insbesondere die Figuren 3 und 4 zeigen, weist die Höhen-Verstelleinrichtung 14 ein in der Drehachse der Einstell-Handhabe 16 liegendes Untersetzungsgetriebe 17 mit einer einzigen Getriebestufe 18 auf, deren Übersetzungsverhältnis durch die beispielsweise etwa 5 mm betragende Steigung eines vorzugsweise nach Art eines Sägezahngewindes ausgebildeten Spindelgewindes bestimmt ist, dessen weniger geneigte Wendelflanken zur Abstützung des Gewichtsdruckes dienen. Diese, unmittelbar im Bereich der Einstell-Handhabe 16 liegende bzw. in diese annähernd bis zu ihrer Oberseite hineinragende, im wesentlichen vollständig an der Oberseite des Mähergehäuses liegende Getriebestufe 18 ist über einen von ihr nach unten führenden Lenkertrieb 19 mit einem ersten von zwei Verstellträgern 21 verbunden, welcher die hinteren Laufräder 8 bzw. deren beide gesonderte Radlagerungen trägt. Ein vorderer, entsprechender Verstellträger 22 für die vorderen Laufräder 9 ist mit dem hinteren Verstellträger 21 über einen Übertragungstrieb zwangsgekoppelt.

Der hintere Verstellträger 21 ist etwa in Höhe der Unterseite des Fahrgestelles 2 bzw. etwa in Höhe des Mähwerkzeuges in Verstellträgerlagerungen 23 um eine zu den Radachsen 10, 11 parallele Achse mit einer Trägerwelle 25 gelagert, die in jeder Höheneinstellung im wesentlichen unterhalb der Laufradachse 10 und gegenüber dieser geringfügig nach vorne versetzt liegt sowie zwischen den einander zugekehrten Innenseiten des hinteren Laufräder 8 vorgesehen ist. Diese Trägerwelle 25 trägt an beiden Enden im wesentlichen starre, jedoch um ihre Achse ggf. justierbar verbundene, annähernd V- sowie plattenförmige Trägerwangen 26, die unmittelbar benachbart zu den einander zugekehrten Innenseiten der hinteren Laufräder 8 vorgesehen sind und jeweils am hinteren, im wesentlichen in jeder Stellung nach oben bzw. schräg nach hinten weisenden V-Schenkel die Radlagerungen für das zugehörige Laufrad 8 aufweisen. Die Trägerwelle 25 liegt in den V-Spitzen der beiden Trägerwangen 26.

Der vordere Verstellträger 22 weist eine entsprechende, zu den Radachsen 10, 11 und zur hinteren Trägerwelle parallele Trägerwelle 25 auf, die ebenfalls annähernd über die Breite des Fahrgestelles 2 zwischen den beiden vorderen Laufrädern 9 durchgeht, jedoch zweckmäßig geringfügig höher als die hintere Trägerwelle derart liegt, daß sie bei höchster Einstellung des Mähwerkzeuges geringfügig oberhalb der zugehörigen Radachse 11 vorgesehen sein kann. Diese Trägerwelle 25, deren Abstand von der in jeder Höheneinstellung dahinter liegenden Radachse 11 entsprechend dem kleineren Durchmesser der Laufräder 9 geringfügig kleiner als der entsprechende Abstand der hinteren Trägerwelle von der zugehörigen Radachse 10 ist, ist ebenfalls in seitlich im Bereich der Seitenbegrenzungen der Radausschnitte liegenden Verstellträgerlagerungen 24 drehbar gelagert und ist an beiden Enden jeweils mit einer im wesentlichen dreieckförmigen Trägerwange 27 im Bereich einer Dreieckspitze drehfest verbunden, die im Bereich einer weiteren Dreieckspitze die Radlagerungen für das zugehörige Laufrad 9 aufweist.

Der Übertragungstrieb 20 liegt entsprechend dem Untersetzungsgetriebe 17, jedoch weiter als dieses seitlich gegenüber der Mitte der Breite des Fahrgestelles 2 versetzt und verbindet nur zwei seitliche, in Laufrichtung etwa in einer gemeinsamen Ebene hintereinanderliegende Trägerwangen 26, 27. Der Übertragungstrieb 20 ist durch einen durchgehend einteiligen, über den größten Teil seiner Länge zur Laufebene annähernd parallelen Lenker gebildet, dessen vorderes, stumpfwinklig nach unten abgewinkeltes Ende im Bereich der dritten Dreieckspitze an der vorderen Trägerwange 27 und dessen hinteres, ebenfalls stumpfwinklig nach unten abgewinkeltes Ende im Bereich des nach oben ragenden Endes des vorderen V-Schenkels der hinteren Trägerwange 26 angelenkt ist. Die Enden des Übertragungstriebes 20 können dabei flach an den Außenseiten der zugehörigen Trägerwangen 26, 27 jeweils zwischen diesen und der Innenseite des zugehörigen, Laufrades 8 bzw. 9 liegen. Es ist auch denkbar, den Übertragungstrieb 20 zum Zwecke der Justierung beispielsweise teleskopartig lägenveränderbar und im jeweiligen Einstellzustand feststellbar auszubilden.

In der niedersten Höheneinstellung des Mähwerkzeuges liegen die hintere Anlenkstelle des Übertragungstriebes 20 und die hintere Radachse 10 etwa in gleicher Höhe symmetrisch beiderseits einer zur Laufebene rechtwinkligen Axialebene der hinteren Trägerwelle 25, wobei der entsprechende, spitzwinklige V-Winkel in der Größenordnung von 60° liegt, vorzugsweise geringfügig kleiner ist. In der höchsten Einstellung des Mähwerkzeuges ist die hintere Trägerwelle 25 demgegenüber etwa um 55° derart verdreht, daß die hintere Anlenkachse des Übertragungstriebes 20 annähernd in gleicher Höhe, jedoch geringfügig hinter der hinteren Trägerwelle 25, liegt, während sich die hintere Radachse 10 annähernd in Höhe der Unterseite des Fahrgestelles 2 bzw. des Mähwerkzeuges befindet. Der Drehwinkel der hinteren Trägerwelle 25 zwischen diesen beiden Endstellungen ist mit etwa 45° gegenüber dem zugehörigen V-Winkel kleiner. Entsprechendes gilt auch für die der vorderen Trägerwelle 25 zugehörigen Anlenk- und Lagerachsen, wobei jedoch hier der entsprechende V-Winkel mit etwa 70° und der maximale Schwenkwinkel mit etwa 60° gegenüber der hinteren Trägerwelle 25 um etwa ein Fünftel bzw. ein Drittel größer sind.

In der tiefsten Höheneinstellung des Mähwerkzeuges liegt die Anlenkstelle des vorderen Endes des Übertragungsgliedes geringfügig höher als dessen hintere Anlenkstelle über der Laufebene bzw. über der zugehörigen Radachse 11 und vor dieser bzw. vor der zugehörigen Trägerwelle 25, während in der höchsten Einstellung des Mähwerkzeuges die vordere Anlenkstelle des Übertragungstriebes 20 geringfügig hinter der zugehörigen Trägerwelle 25 und in etwa gleicher Höhenlage wie in der anderen Endstellung liegt. Der Übertragungstrieb 20 kann im wesentlichen innerhalb des Mähergehäuses oder seitlich unmittelbar benachbart zum Motorgehäuse oberhalb desjenigen untersten Gehäuseteiles liegen, der für die abgeschirmte Aufnahme des Mähwerkzeuges dient. In diesem Fall kann er wenigstens auf einem Teil seiner Länge seitlich außen von einem Gehäusesteg des Mähergehäuses abgeschirmt sein. Durch die beschriebene Ausbildung der Radlageranordnungen und des Übertragungstriebes ergeben sich günstige Kräftverhältnisse, wobei der als Flachprofilstab ausgebildete Übertragungstrieb praktisch nur auf Zug belastet wird.

Das Untersetzungsgetriebe 17 weist ein drehfest mit der Einstell-Handhabe 16 verbundenes treibendes Getriebeglied 28 und ein koaxial in diesem liegendes getriebenes Getriebeglied 29 auf, welches über den Lenkertrieb 19 unmittelbar mit der hinteren Trägerwelle 25 verbunden ist, wobei das Übersetzungsverhältnis für die maximale Höhenverstellung von etwa 50 mm so gewählt ist, daß hierfür etwa zehn Umdrehungen der Einstell-Handhabe 16 benötigt werden, das getriebene Getriebeglied 29 jedoch annähernd den gleichen Axialweg von beispielsweise etwa 50 mm ausführt. Das treibende Getriebeglied 28 ist im wesentlichen durch einen Hülsenkörper 32 gebildet, der am Innenumfang annähernd über seine gesamte Länge mit einer durch das beschriebene Gewinde gebildeten Getriebe-Steigungswenel 30 versehen ist. Das gegenüber dem Hülsenkörper 32 kürzere, getriebene Getriebeglied 29 ist nach Art eines Kolbenhemdes eines Verbrennungsmotors als kurzer Zylinderkörper ausgebildet, dessen Axialerstreckung in der Größenordnung seines Durchmessers liegt und der am Außenumfang in Form eines Außengewindes mit einer in das Innengewinde des Hülsenkörpers 32 kämmend eingreifenden Getriebe-Steigungswendel 30 annähernd über seine ganze Länge versehen ist.

Das Fahrgestell 2 bzw. das Mähergehäuse bildet für die Aufnahme des Untersetzungsgetriebes 17 in Form eines nach oben vorstehenden Ansatzes ein Chassis-Gehäuse 33 für das Untersetzungsgetriebe 17, von dessen oberer Stirnwand eine in ihm liegende, napfförmige Lagermuffe 34 nach unten vorsteht, die einteilig mit dem Chassis-Gehäuse 33 ausgebildet ist. Der ebenfalls napfartige Hülsenkörper 32 weist an seinem durchbrochenen Napfboden einen die zugehörige Bodenöffnung begrenzenden, ringförmigen Einsprengansatz auf, der in die Bodenöffnung der ebenfalls durchbrochenen Bodenwand der Lagermuffe 34 im wesentlichen spielfrei eingreift und diese an der Außenseite mit hakenartigen Vorsprüngen zur Axialsicherung hintergreift. Der mit der Außenseite seiner Bodenwand an der Innenseite der Bodenwand der Lagermuffe 34 axial abgestützte und innerhalb der Lagermuffe 34 im wesentlichen radialspielfrei anliegende Hülsenkörper 32 greift nur mit einem Teil seiner Länge in die Lagermuffe 34 ein, während sein übriger, etwa gleich langer Teil nach oben bzw. aus der offenen Seite über die Lagermuffe 34 bzw. das Chassis-Gehäuse 33 vorsteht.

An diesem vorstehenden Teil ist der Hülsenkörper 32 unmittelbar einteilig mit einem über seinen Außenumfang vorstehenden, napfförmig hohlen Drehkopf 36 versehen, dessen Stirnwand benachbart zur genannten Stirnwand des Chassis-Gehäuses 33 liegt und der den Mantel der Einstell-Handhabe 16 bildet. Das vom Chassis-Gehäuse 33 bzw. von den Bodenwänden des Hülsenkörpers 32 und der Lagermuffe 34 abgekehrte offene Ende des Drehkopfes 36, das geringfügig über das zugehörige Ende des Hülsenkörpers 32 vorsteht, ist mit einem annähernd scheibenförmigen Kappendeckel 35 verschlossen, welcher in den Innenumfang des Drehkopfes 36 eingesprengt ist und im Zentrum einen den Hülsenkörper 32 am Außenumfang umgreifenden inneren Flanschansatz aufweist, so daß der vorstehende Teil des Hülsenkörpers 32 und der Drehkopf 36 unmittelbar gegeneinander zentriert abgestützt sind.

Vor Aufsetzen des Kappendeckels 35 kann das Getriebeglied 29 durch das zugehörige offene Ende in das Getriebeglied 28 eingeschraubt werden. In seiner der tiefsten Höheneinstellung des Mähwerkzeuges entsprechenden Stellung ist das Getriebeglied 29 durch Axialanschlag seiner zugehörigen Stirnfläche an der ringschulterförmigen Bodenwand des Hülsenkörpers 32 festgelegt. In der anderen Endstellung des Getriebegliedes 29 ist ein solcher Axialanschlag nicht vorgesehen, um ein versehentliches Absprengen des Kappendeckels 35 unter den auftretenden Anschlagkräften zu vermeiden. Vielmehr weist das Getriebeglied 29 an seiner zugehörigen Stirnseite in Nähe des Außenumfanges mindestens einen keilförmig begrenzten, nach oben vorstehenden Anschlag 40 mit einer etwa in einer Axialebene des Getriebegliedes 29 liegenden Anschlagfläche auf, der axial über die Stirnfläche des Getriebegliedes 29 um ein Maß vorsteht, das kleiner als die Steigung bzw. die Hälfte der Steigung der Steigungswendeln 30, 31 ist. Diesem Anschlag 40 ist als Gegenanschlag 41 ein entsprechender, keilförmig begrenzter und innerhalb des Ringflansches liegender Vorsprung an der Innenseite der Stirnwand des Kappendeckels 35 zugeordnet.

Die Steigungswendeln 30, 31 sind so aufeinander abgestimmt, daß der Anschlag 40 bei der entsprechenden Axialbewegung des Getriebegliedes 29 in den Drehweg des Gegenanschlages 41 gelangt ist, bevor der Anschlag 40 und der Gegenanschlag 41 die zur Anschlagberührung übereinstimmende relative Drehlage erreicht haben, wobei die Anschlagberührung erfolgt, bevor das Getriebeglied 29 axial an dem Kappendeckel 35 anschlägt. Dadurch entstehen bei der zugehörigen Anschlagbegrenzung des Getriebegliedes 29 als Anschlagkräfte nur Drehkräfte, die auf den Kappendeckel 35 wirken. Durch die Anschlagbegrenzung eventuell auftretende Überlastungen können dann nach Art einer Sicherheits-Rutschkupplung durch die reibschlüssige Schnappverbindung des Kappendeckels 35 mit dem Drehkopf 36 aufgefangen werden, da die zur Betätigung aufgebrachten manuellen Kräfte in der Hauptsache an dessen Mantel angreifen. Ein entsprechender Drehanschlag wäre auch zur Anschlagbegrenzung der anderen bzw. unteren Endstellung des Getriebegliedes 29 denkbar.

Das Lenkergetrieb 19 ist im wesentlichen ausschließlich durch einen Zuglenker 37 und einen Wellenarm 38 der hinteren Trägerwelle 25 gebildet. Der, beispielsweise aus einem Rohrprofil mit flachgequetschten Anlenkenden hergestellte Zuglenker 37 steht in der höchsten Einstellung des Mähwerkzeuges annähernd rechtwinklig zur Laufebene bzw. achsgleich zum Untersetzungsgetriebe 17, während er bei der tiefsten Höheneinstellung unter wenigen Winkelgraden nach hinten geneigt ist. Das Getriebeglied 29 weist in seiner zugehörigen Stirnseite eine taschen- bzw. schlitzförmige und annähernd bis zur anderen Stirnfläche reichende Ausnehmung auf, welche rechtwinklig zu ihrer Mittelebene von einer das Getriebeglied 29 durchsetzenden Diametralbohrung in Nähe ihrer Bodenfläche durchsetzt wird und zur gelenkigen Aufnahme des zugehörigen Anlenkendes des Zuglenkers 37 dient. In eine mit der Diametralbohrung des Getriebegliedes 29 fluchtende Bohrung dieses Anlenkendes ist nach Art eines Kolbenbolzens ein im Getriebeglied 29 verankerter Gelenkbolzen eingesetzt, durch welchen der Zuglenker 37 gegenüber dem Getriebeglied 29 um eine zur Trägerwelle 25 parallele Achse schwenkbar gelagert ist. Durch diesen Gelenkbolzen ist auch gleichzeitig das Getriebeglied 29 über den mit dem Wellenarm 38 verbundenen Zuglenker 37 gegenüber dem Fahrgestell verdrehgesichert, so daß es mit dem Getriebeglied 28 nicht mitdreht, wobei diese Verdrehsicherung eine gewisse, elastisch rückfedernde Elastizität hat, da hierbei der durchgehend geradlinige Zuglenker 37 im wesentlichen auf Torsion beansprucht wird.

Das vom Untersetzungsgetriebe 17 entfernt liegende untere Anlenkende des Zuglenkers 37 ist über einen Gelenkbolzen am freien Ende des Wellenarmes 38 um eine zur Trägerwelle 25 parallele Achse gelenkig angelenkt, wobei der Wellenarm 38 radial nach vorne vorstehend zwischen den Trägerwangen 26 an der hinteren Trägerwelle 25 befestigt ist, in tiefster Höheneinstellung des Mähwerkzeuges etwa parallel zur Laufebene nach vorne vorsteht und in höchster Höheneinstellung demgegenüber spitzwinklig schräg nach oben ansteigt. Die wirksame Hebelarmlänge des Wellenarmes 38 liegt etwa in der Größenordnung des Achsabstandes zwischen der hinteren Trägerwelle 25 und der zugehörigen Radachse 10 bzw. des demgegenüber etwa gleichen Abstandes der zugehörigen Anlenkstelle des Übertragungstriebes 20, wobei die wirksame Hebellänge des Wellenarmes 38 demgegenüber geringfügig kleiner sein kann. Im Falle der vorderen Trägerwelle 25 ist deren Achsabstand zur Radachse 11 kleiner als ihr Achsabstand zur zugehörigen Anlenkstelle des Übertragungstriebes 20. Der Zuglenker 37 durchsetzt die offenen Bodenwandungen des Hülsenkörpers 32 und der Lagermuffe 34, deren Durchbrüche relativ eng an den Querschnitt des Zuglenkers 37 angepaßt sind.

Die Höhen-Anzeigeeinrichtung 15 weist ein kreisscheiben-bzw. zahnradförmiges flaches Anzeigeorgan 42 auf, das benachbart zu seinem Außenumfang, jedoch innerhalb einer am Außenumfang vorgesehenen Zahnung, über den Umfang verteilte Höhenbezeichnungen 43 trägt und über ein Schrittschaltwerk 44 unmittelbar vom Untersetzungsgetriebe 17, und zwar von dessen treibendem Getriebeglied 28, nämlich der Einstell-Handhabe 16, angetrieben wird. Das achsparallel neben dem Untersetzungsgetriebe 17 und unmittelbar hinter der Handhabe zwischen den Anlenklagern 39 etwa in Höhe der Unterseite der Handhabe 16 liegende Anzeigeorgan 42 wird über ein Stellglied 45 angetrieben, welches einteilig mit der Bodenwand des napfförmigen Drehkopfes 36 bzw. mit dem Hülsenkörper 32 ausgebildet ist und über die genannte, ringförmige Bodenwand in das Chassis-Gehäuse 33 annähernd bis zu dessen geringfügig zurückversetzten Stirnwand vorsteht.

Dem Stellglied ist am Anzeigeorgan 42 die beispielsweise etwa zwölfteilige Zahnung 46 mit verhältnismäßig breiten Zähnen und schmalen, axialschlitzförmigen Zahnlücken zugeordnet, die an einen einzigen, axialstiftförmigen Mitnehmer 47 des Stellgliedes 45 angepaßt sind. Bei jeder vollen Drehung taucht dieser Mitnehmer 47 einmal in eine Zahnlücke des Anzeigeorganes 42 ein und dreht dieses um eine Zahnteilung weiter, wonach der Mitnehmer 37 wieder aus der Zahnlücke heraustaucht. In der jeweiligen Anzeigestellung kann das Anzeigeorgan 42 durch eine geeignete Federrast gegen versehentliche Verdrehung kraftschlüssig gesichert sein.

Das Anzeigeorgan 42 ist mit einer Nabe an der Innenseite einer Anzeigeplatte 48 um einen einteilig von dieser abstehenden, federnd spreizbaren Lagerzapfen 50 drehbar gelagert und liegt zwischen der Stirnwand des Chassis-Gehäuses 33 und dieser Anzeigeplatte 48. Die Anzeigeplatte 48 wird in einem eng angepaßten Durchbruch im Bereich der Bodenwand des Drehkopfes 36 von dem Getriebeglied 28 durchsetzt und deckt das Anzeigeorgan 42 im wesentlichen vollständig bis auf ein durch einen fensterartigen Ausschnitt gebildetes Anzeigefeld 49 ab, das sich auf der von der Einstell-Handhabe 16 abgekehrten Seite des Lagerzapfens 50 befindet. In diesem Anzeigefeld 49 erscheint an der Oberseite der Höhen-Anzeigeeinrichtung 15 jeweils eine der Höhenbezeichnungen 43.

Die Anzeigeplatte 48 ist im dargestellten Ausführungsbeispiel mit ihrem Lagerzapfen 50 nach Art einer Schnappverbindung in einem Muffenansatz der Stirnwand des Chassis-Gehäuses 33 lagegesichert, wobei das Anzeigeorgan 42 mit seiner Nabe auf dem Außenumfang dieses Muffenansatzes drehbar gelagert ist. Die Anzeigeplatte 48 verschließt außerdem nach Art eines Deckels den durch die zurückversetzte Stirnwand des Chassis-Gehäuses 33 gebildeten Aufnahmeraum für das Schrittschaltwerk 44 dadurch, daß sie mit einem abgewinkelten Rand in eine Endschulter des über diese Stirnwand vorstehenden Teiles des Mantels des Gehäuses 33 eingreift. Der genannte Aufnahmeraum kann mit einer in der Stirnwand vorgesehenen Ablauföffnung für eingedrungenes Wasser versehen sein.

## Patentansprüche (Patentansprüche für folgende(n) Vertragsstaat(en): AT, BE, CH, LI, ES, GB, IT, NL, SE)

1. Rasenmäher mit einem Fahrgestell (2), einer Aufnahme für ein Mähwerkzeug, mindestens einer Verstelleinrichtung (14) zur gegenseitigen Verstellung wenigstens eines Stellteiles (21, 22) des Fahrgestelles und der Aufnahme mit mindestens einer Einstell-Handhabe (16), zwischen der und dem Stellteil (21, 22) ein Stelltrieb vorgesehen ist, welcher mindestens ein langgestrecktes Übertragungsorgan (20, 37) aufweist, dadurch gekennzeichnet, daß mindestens ein Übertragungsorgan (20, 37) so angeordnet ist, daß es als Reaktion auf die Kräfte, die das Rasenmähergewicht auf das Fahrgestell ausübt, auf Zug beansprucht ist.

2. Rasenmäher nach Anspruch 1, dadurch gekennzeichnet, daß das Fahrgestell (2) einerseits einen Mähwerkzeug-Antrieb (3), wie eine aufrechte Mähwelle (5), und andererseits zur beweglichen Bodenabstützung mindestens einen Läufer (6, 7), wie Laufräder (8, 9), aufweist, daß die Verstelleinrichtung (14) eine auf wenigstens einen als Verstellträger ausgebildeten Stellteil (21, 22) wirkende Höhen-Verstelleinrichtung (14) zur gegenseitigen Verstellung des Mähwerkzeug-Antriebes (3) und mindestens eines Läufers (6. 7) über einen Stellweg mit wenigstens einer Einstell-Handhabe (16) ist, und daß vorzugsweise mindestens eine im wesentlichen mit der Höhen-Verstelleinrichtung (14) gekuppelte Höhen-Anzeigeeinrichtung (15) vorgesehen ist, die insbesondere ein mit der Höhen-Verstelleinrichtung (14) mitlaufendes Anzeigeorgan (42) aufweist.

3. Rasenmäher nach Anspruch 1 oder 2, dadurch gekennzeichnet, daß zwischen einem Stellteil (21, 22) und einer Einstell-Handhabe (16), insbesondere näher bei dieser ein mindestens einstufiges Untersetzungsgetriebe (17) vorgesehen ist, daß vorzugsweise eine Getriebestufe (18) des Untersetzungsgetriebes (17) gegeneinander drehbar gelagerte, kämmend ineinandergreifende Getriebeglieder (28, 29) aufweist, von denen insbesondere wenigstens eines mit einer Getriebe-Steigungswendel (30, 31) versehen ist und daß vorzugsweise eine Getriebestufe (18) des Untersetzungsgetriebes (17) einen Spindeltrieb, insbesondere einen Gewindespindeltrieb mit koaxial zueinander und/oder zur Handhabe (16) liegenden Getriebegliedern (28, 29) aufweist.

4. Rasenmäher nach einem der vorhergehenden Ansprüche, dadurch gekennzeichnet, daß eine Getriebestufe (18) eines Untersetzungsgetriebes (17) einer Verstelleinrichtung (14) ein in einem zylinderartigen Getriebeglied (28) axial bewegbares kolbenartiges Getriebeglied (29) aufweist und daß die Getriebeglieder (28, 29) insbesondere mit einem Innen- und einem Außengewinde ineinandergreifen, wobei vorzugsweise das Untersetzungsgetriebe (17) nur eine einzige Getriebestufe (18) mit kämmend ineinandergreifenden Getriebegliedern (28, 29) aufweist, die insbesondere über einen einstufigen, vorzugsweise das Übertragungsorgan (37) als Zuglenker aufweisenden, Lenkertrieb (19) mit mindestens einem Stellteil (21) antriebsverbunden ist.

5. Rasenmäher nach einem der vorhergehenden Ansprüche, dadurch gekennzeichnet, daß mindestens ein Ende des Stellweges einer Verstelleinrichtung durch unmittelbare gegenseitige Anschlagbegrenzung von Getriebegliedern (28, 29) einer Getriebestufe (18) eines Untersetzungsgetriebes (17) begrenzt ist, wobei vorzugsweise ein stirnseitiger Anschlag (40) eines Getriebegliedes (29) gegen Ende des Stellweges im Drehweg eines Gegenanschlages (41) des anderen Getriebegliedes (28) liegt.

6. Rasenmäher nach einem der vorhergehenden Ansprüche, dadurch gekennzeichnet, daß ein treibendes Getriebeglied (28) einer Getriebestufe (18) eines Untersetzungsgetriebes (17) einer Verstelleinrichtung (14) unmittelbar und insbesondere hinsichtlich dessen Getriebebewegung im wesentlichen starr mit der Einstell-Handhabe (16) verbunden ist, daß insbesondere ein hülsenförmiges Getriebeglied (28) an einem Ende einen Drehknopf (36) und/oder den Gegenschlag (41) trägt und im Bereich des anderen Endes unter Bildung eines Axialanschlages für ein innenliegendes getriebenes Getriebeglied (29) einen Durchtritt für eine insbesondere durch das Übertragungsorgan (37) gebildete Getriebeverbindung dieses getriebenen Getriebegliedes (29) mit dem Stellteil (21,22) aufweist.

7. Rasenmäher nach einem der vorhergehenden Ansprüche, dadurch gekennzeichnet, daß ein getriebenes Getriebeglied (29) einer Getriebestufe (18) eines Untersetzungsgetriebes (17) einer Verstelleinrichtung (14) über eine wenigstens teilweise als Lenkertrieb (19) ausgebildete Getriebeverbindung mit einem Stellteil (21, 22) verbunden ist, wobei vorzugsweise ein innenliegendes Getriebeglied (29) nach Art einer Pleuelstange einen das Übertragungsorgan bildenden Zuglenker (37) gelenkig trägt, der im Abstand von der Getriebestufe (18) unmittelbar mit einer Trägerwelle (25) antriebsverbunden ist.

8. Rasenmäher nach einem der vorhergehenden Ansprüche, dadurch gekennzeichnet, daß mindestens ein Stellteil (21, 22) auf einer Bogenbahn schwenkbar gelagert und insbesondere wenigstens ein Stellteil (21, 22) unmittelbar auf mindestens einer Trägerwelle (25) angeordnet ist, daß vorzugsweise im Abstand zueinander liegende, im wesentlichen um achsparallele bzw. achsgleiche Stellteillagerungen (23, 24) schwenkbare Stellteile (21, 22) vorgesehen sind und daß insbesondere in gesonderten Stellteillagerungen (23, 24) gelagerte Stellteile (21, 22) jeweils über einen durch einen Zwischenlenker oder dgl. gebildeten Übertragungstrieb (20) miteinander verbunden sind.

9. Rasenmäher nach einem der vorhergehenden Ansprüche, dadurch gekennzeichnet, daß mindestens eine Bodenabstützung des Rasenmähers gegenüber dem Fahrgestell (2) höhenverstellbar gelagert ist, daß insbesondere zwei in Laufrichtung hintereinanderliegende Stellteillagerungen (23, 24) vorgesehen sind, die im wesentlichen unterhalb von Radachsen (10, 11) der Boden abstützung liegen und über einen seitlich des Mähwerkzeug-Antriebes (3) annähernd parallel zur Laufebene liegenden Übertragungsantrieb (20) miteinander sowie über das im wesentlichen aufrechte Zugorgan (37) mit der Getriebestufe (18) des Untersetzungsgetriebes (17) verbunden sind.

10. Rasenmäher nach einem der vorhergehenden Ansprüche, dadurch gekennzeichnet, daß eine Einstell-Handhabe (16) einer Verstelleinrichtung (14) von der Oberseite des Rasenmähers (1) zugänglich im wesentlichen an dessen Oberseite, insbesondere mit aufrechter Drehachse, annähernd zwischen Anlenklagern (39) der Schenkel (13) eines bügelförmigen Fahrgriffes (12) für den Rasenmäher (1) liegt.

11. Rasenmäher nach einem der vorhergehenden Ansprüche, dadurch gekennzeichnet, daß die Anzeigeeinrichtung (15) unter Umgehung des Übertragungsorganes (37) im wesentlichen unmittelbar von der Handhabe (16) angetrieben ist.

12. Rasenmäher nach einem der vorhergehenden Ansprüche, dadurch gekennzeichnet, daß ein Anzeigeorgan (42) einer Anzeigeeinrichtung (15), insbesondere eine über den Umfang mit Höhenbezeichnungen (43) versehene Anzeigescheibe, unmittelbar von einem treibenden Stellglied (45) der Verstelleinrichtung (14) angetrieben ist, das vorzugsweise an der Handhabe (16) vorgesehen ist.

13. Rasenmäher nach einem der vorhergehenden Ansprüche, dadurch gekennzeichnet, daß ein Anzeigeorgan (42) einer Anzeigeeinrichtung (15) über ein Schrittschaltwerk (44) insbesondere derart mit der Verstelleinrichtung (14) antriebsverbunden ist, daß je voller Drehung des treibenden Stellgliedes (45) mindestens ein Schaltschritt des Anzeigeorganes (42) vorgesehen ist, das vorzugsweise über den gesamten Stellweg höchstens eine volle Drehung ausführt.

14. Rasenmäher nach einem der vorhergehenden Ansprüche, dadurch gekennzeichnet, daß ein Anzeigeorgan (42) eine im Drehweg mindestens eines Mitnehmers (47) einer Einstell-Handhabe (16) liegende Zahnung (46) aufweist und vorzugsweise im wesentlichen nur im Bereich eines fensterartigen Anzeigefeldes (49) benachbart zur Einstell-Handhabe (16) frei liegt.

## Patentansprüche (Patentansprüche für folgende(n) Vertragsstaat(en): DE, FR)

1. Rasenmäher mit einem Fahrgestell (2), einer Aufnahme für ein Mähwerkzeug, mindestens einer Verstelleinrichtung (14) zur gegenseitigen Verstellung wenigstens eines Stellteiles (21, 22) des Fahrgestelles und der Aufnahme mit mindestens einer Einstell-Handhabe (16), zwischen der und dem Stellteil (21, 22) ein Stelltrieb vorgesehen ist, welcher zwei langgestreckte Übertragungsorgane (20, 37) aufweist, dadurch gekennzeichnet, daß die zwei Übertragungsorgane (20, 37) so angeordnet sind, daß sie als Reaktion auf die Kräfte, die das Rasenmähergewicht auf das Fahrgestell ausübt, auf Zug beansprucht sind.

2. Rasenmäher nach Anspruch 1, dadurch gekennzeichnet, daß das Fahrgestell (2) einerseits einen MähwerkzeugAntrieb (3), wie eine aufrechte Mähwelle (5), und andererseits zur beweglichen Bodenabstützung mindestens einen Läufer (6, 7), wie Laufräder (8, 9), aufweist, daß die Verstelleinrichtung (14) eine auf wenigstens einen als Verstellträger auSgebildeten Stellteil (21, 22) wirkende Höhen-Verstelleinrichtung (14) zur gegenseitigen Verstellung des Mähwerkzeug-Antriebes (3) und mindestens eines Läufers (6. 7) über einen Stellweg mit wenigstens einer Einstell-Handhabe (16) ist, und daß vorzugsweise mindestens eine im wesentlichen mit der Höhen-Verstelleinrichtung (14) gekuppelte Höhen-Anzeigeeinrichtung (15) vorgesehen ist, die insbesondere ein mit der Höhen-Verstelleinrichtung (14) mitlaufendes Anzeigeorgan (42) aufweist.

3. Rasenmäher nach Anspruch 1 oder 2, dadurch gekennzeichnet, daß zwischen einem Stellteil (21, 22) und einer Einstell-Handhabe (16), insbesondere näher bei dieser ein mindestens einstufiges Untersetzungsgetriebe (17) vorgesehen ist, daß vorzugsweise eine Getriebestufe (18) des Untersetzungsgetriebes (17) gegeneinander drehbar gelagerte, kämmend ineinandergreifende Getriebeglieder (28, 29) aufweist, von denen insbesondere wenigstens eines mit einer Getriebe-Steigungswendel (30, 31) versehen ist und daß vorzugsweise eine Getriebestufe (18) des Untersetzungsgetriebes (17) einen Spindeltrieb, insbesondere einen Gewindespindeltrieb mit koaxial zueinander und/oder zur Handhabe (16) liegenden Getriebegliedern (28, 29) aufweist.

4. Rasenmäher nach einem der vorhergehenden Ansprüche, dadurch gekennzeichnet, daß eine Getriebestufe (18) eines Untersetzungsgetriebes (17) einer Verstelleinrichtung (14) ein in einem zylinderartigen Getriebeglied (28) axial bewegbares kolbenartiges Getriebeglied (29) aufweist und daß die Getriebeglieder (28, 29) insbesondere mit einem Innen- und einem Außengewinde ineinandergreifen, wobei vorzugsweise das Untersetzungsgetriebe (17) nur eine einzige Getriebestufe (18) mit kämmend ineinandergreifenden Getriebegliedern (28, 29) aufweist, die insbesondere über einen einstufigen, vorzugsweise das Übertragungsorgan (37) als Zuglenker aufweisenden, Lenkertrieb (19) mit mindestens einem Stellteil (21) antriebsverbunden ist.

5. Rasenmäher nach einem der vorhergehenden Ansprüche, dadurch gekennzeichnet, daß mindestens ein Ende des Stellweges einer Verstelleinrichtung durch unmittelbare gegenseitige Anschlagbegrenzung von Getriebegliedern (28, 29) einer Getriebestufe (18) eines Untersetzungsgetriebes (17) begrenzt ist, wobei vorzugsweise ein stirnseitiger Anschlag (40) eines Getriebegliedes (29) gegen Ende des Stellweges im Drehweg eines Gegenanschlages (41) des anderen Getriebegliedes (28) liegt.

6. Rasenmäher nach einem der vorhergehenden Ansprüche, dadurch gekennzeichnet, daß ein treibendes Getriebeglied (28) einer Getriebestufe (18) eines Untersetzungsgetriebes (17) einer Verstelleinrichtung (14) unmittelbar und insbesondere hinsichtlich dessen Getriebebewegung im wesentlichen starr mit der Einstell-Handhabe (16) verbunden ist, daß insbesondere ein hülsenförmiges Getriebeglied (28) an einem Ende einen Drehknopf (36) und/oder den Gegenschlag (41) trägt und im Bereich des anderen Endes Unter Bildung eines Axialanschlages für ein innenliegendes getriebenes Getriebeglied (29) einen Durchtritt für eine insbesondere durch das Übertragungsorgan (37) gebildete Getriebeverbindung dieses getriebenen Getriebegliedes (29) mit dem Stellteil (21,22) aufweist.

7. Rasenmäher nach einem der vorhergehenden Ansprüche, dadurch gekennzeichnet, daß ein getriebenes Getriebeglied (29) einer Getriebestufe (18) eines Untersetzungsgetriebes (17) einer Verstelleinrichtung (14) über eine wenigstens teilweise als Lenkertrieb (19) ausgebildete Getriebeverbindung mit einem Stellteil (21, 22) verbunden ist, wobei vorzugsweise ein innenliegendes Getriebeglied (29) nach Art einer Pleuelstange einen das Übertragungsorgan bildenden Zuglenker (37) gelenkig trägt, der im Abstand von der Getriebestufe (18) unmittelbar mit einer Trägerwelle (25) antriebsverbunden ist.

8. Rasenmäher nach einem der vorhergehenden Ansprüche, dadurch gekennzeichnet, daß mindestens ein Stellteil (21, 22) auf einer Bogenbahn schwenkbar gelagert und insbesondere wenigstens ein Stellteil (21, 22) unmittelbar auf mindestens einer Trägerwelle (25) angeordnet ist, daß vorzugsweise im Abstand zueinander liegende, im wesentlichen um achsparallele bzw. achsgleiche Stellteillagerungen (23, 24) schwenkbare Stellteile (21, 22) vorgesehen sind und daß insbesondere in gesonderten Stellteillagerungen (23, 24) gelagerte Stellteile (21, 22) jeweils über einen durch einen Zwischenlenker oder dgl. gebildeten Übertragungstrieb (20) miteinander verbunden sind.

9. Rasenmäher nach einem der vorhergehenden Ansprüche, dadurch gekennzeichnet, daß mindestens eine Bodenabstützung des Rasenmähers gegenüber dem Fahrgestell (2) höhenverstellbar gelagert ist, daß insbesondere zwei in Laufrichtung hintereinanderliegende Stellteillagerungen (23, 24) vorgesehen sind, die im wesentlichen unterhalb von Radachsen (10, 11) der Boden abstützung liegen und über einen seitlich des Mähwerkzeug-Antriebes (3) annähernd parallel zur Laufebene liegenden Übertragungsantrieb (20) miteinander sowie über das im wesentlichen aufrechte Zugorgan (37) mit der Getriebestufe (18) des Untersetzungsgetriebes (17) verbunden sind.

10. Rasenmäher nach einem der vorhergehenden Ansprüche, dadurch gekennzeichnet, daß eine Einstell-Handhabe (16) einer Verstelleinrichtung (14) von der Oberseite des Rasenmähers (1) zugänglich im wesentlichen an dessen Oberseite, insbesondere mit aufrechter Drehachse, annähernd zwischen Anlenklagern (39) der Schenkel (13) eines bügelförmigen Fahrgriffes (12) für den Rasenmäher (1) liegt.

11. Rasenmäher nach einem der vorhergehenden Ansprüche, dadurch gekennzeichnet, daß die Anzeigeeinrichtung (15) unter Umgehung des Übertragungsorganes (37) im wesentlichen unmittelbar von der Handhabe (16) angetrieben ist.

12. Rasenmäher nach einem der vorhergehenden Ansprüche, dadurch gekennzeichnet, daß ein Anzeigeorgan (42) einer Anzeigeeinrichtung (15), insbesondere eine über den Umfang mit Höhenbezeichnungen (43) versehene Anzeigescheibe, unmittelbar von einem treibenden Stellglied (45) der Verstelleinrichtung (14) angetrieben ist, das vorzugsweise an der Handhabe (16) vorgesehen ist.

13. Rasenmäher nach einem der vorhergehenden Ansprüche, dadurch gekennzeichnet, daß ein Anzeigeorgan (42) einer Anzeigeeinrichtung (15) über ein Schrittschaltwerk (44) insbesondere derart mit der Verstelleinrichtung (14) antriebsverbunden ist, daß je voller Drehung des treibenden Stellgliedes (45) mindestens ein Schaltschritt des Anzeigeorganes (42) vorgesehen ist, das vorzugsweise über den gesamten Stellweg höchstens eine volle Drehung ausführt.

14. Rasenmäher nach einem der vorhergehenden Ansprüche, dadurch gekennzeichnet, daß ein Anzeigeorgan (42) eine im Drehweg mindestens eines Mitnehmers (47) einer Einstell-Handhabe (16) liegende Zahnung (46) aufweist und vorzugsweise im wesentlichen nur im Bereich eines fensterartigen Anzeigefeldes (49) benachbart zur Einstell-Handhabe (16) frei liegt.

## Claims (Claims for the following Contracting State(s): AT, BE, CH, LI, ES, GB, IT, NL, SE)

1. Lawnmower with a chassis (2), a receptacle for a mowing tool, at least one adjusting device (14) for the mutual adjustment of at least one control part (21,22) of the chassis and the receptacle with at least one setting handle (16), between which and the control part (21,22) is provided a control drive, which has at least one elongated transmission member (20,37), characterized in that at least one transmission member (20,37) is positioned in such a way that it is tensile-loaded as a reaction to the forces exerted by the lawnmower weight on the chassis.

2. Lawnmower according to claim 1, characterized in that the chassis (2) on the one hand has one mowing tool drive (3), such as a vertical mowing shaft (5), and on the other for movable ground support at least one roller (6,7), such as wheels (8,9), that the adjusting device (14) is a height adjusting device (14) for the reciprocal adjustment of the mowing tool drive (3) acting on at least one control part (21, 22) constructed as adjustment carriers and at least one roller (6,7) over a control path with at least one setting handle (16) and that preferably at least one height indicating device (15) coupled with the height adjusting device (14) is provided and which in particular has an indicating member (42) rotating with the height adjusting device (14).

3. Lawnmower according to claim 1 or 2, characterized in that between a control part (21,22) and a setting handle (16) and in particular closer to the latter is provided at least one single-stage reduction gear (17), that preferably one gear stage (18) of the reduction gear (17) has meshing gear members (28,29) rotatably mounted against one another and whereof in particular at least one is provided with a gear pitch helix (30,31) and that preferably one gear stage (18) of the reduction gear (17) has a spindle drive, particularly a threaded spindle drive with gear members (28,29) coaxial to one another and/or to the handle (16).

4. Lawnmower according to any one of the preceding claims, characterized in that a gear stage (18) of a reduction gear (17) of an adjusting device (14) has a piston-like gear member (29) axially movable in a cylinder-like gear member (28) and that the gear members (28,29) interengage in particular with an internal and an external thread and preferably the reduction gear (17) only has a single gear stage (18) with meshing gear members (28,29), which is in particular drive-connected via a single-stage rod drive (19) with at least one control part (21) and which preferably has the transmission member (37) as the tension rod.

5. Lawnmower according to any one of the preceding claims, characterized in that at least one end of the control path of an adjusting device is limited by direct, reciprocal stop limitation of gear members (28,29) of a gear stage (18) of a reduction gear (17) and preferably a frontal stop (40) of a gear member (29) towards the end of the control path is in the rotation path of a counterstop (41) of the other gear member (28).

6. Lawnmower according to any one of the preceding claims, characterized in that a driving gear member (28) of a gear stage (18) of a reduction gear (17) of an adjusting device (14) is directly connected to the setting handle (16) in a substantially rigid manner with respect to its gear movement, that in particular a sleeve-like gear member (28) carries at one end a rotary head (36) and/or a counterstop (41) and in the vicinity of the other end and accompanied by the formation of an axial stop for an inner, driven gear member (29) has a passage for a gear connection, more particularly formed by the transmission member (37), of said driven gear member (29) with the control part (21,22).

7. Lawnmower according to any one of the preceding claims, characterized in that a driven gear member (29) of a gear stage (18) of a reduction gear (17) of an adjusting device (14) is connected to a control part (21,22) by means of a gear connection at least partly constructed as a rod drive (19) and preferably an inner gear member (29) carries in the manner of a connecting rod and in articulated manner a tension rod (37) forming the transmission member and which spaced from the gear stage (18) is directly drive-connected to a support shaft (25).

8. Lawnmower according to any one of the preceding claims, characterized in that at least one control part (21,22) is pivotably mounted on an arcuate path and in particular at least one control part (21,22) is directly placed on at least one support shaft (25), that preferably there are spaced control parts (21,22) pivotable about an axially parallel or equiaxial control part bearings (23,24) and that in particular control parts (21,22) mounted in separate control part bearings (23,24) are interconnected by means of a transmission drive (20) formed by an intermediate rod or the like.

9. Lawnmower according to any one of the preceding claims, characterized in that at least one ground support of the lawnmower is mounted in vertically adjustable manner with respect to the chassis (2), that in particular two control part bearings (23,24) are provided in succeeding manner in the running direction and which are essentially located below wheel axles (10,11) of the ground support and are interconnected by means of a transmission drive (20) positioned laterally of the mowing tool drive (3) and approximately parallel to the running plane and are connected by means of the substantially vertical tension rod (37) to the gear stage (18) of the reduction gear (17).

10. Lawnmower according to any one of the preceding claims, characterized in that a setting handle (16) of an adjusting device (14), accessible from the top of the lawnmower (1), is substantially located on its top surface and in particular with a vertical rotation axis, approximately between articulated bearings (39) of the legs (13) of a bow-shaped steering handle (12) for the lawnmower (1).

11. Lawnmower according to any one of the preceding claims, characterized in that the indicating device (15), whilst obviating the transmission member (37), is driven substantially directly by the handle (16).

12. Lawnmower according to any one of the preceding claims, characterized in that an indicating member (42) of an indicating device (15), particularly an indicating disk provided over the circumference with height markings (43) is directly driven by a driving control member (45) of the adjusting device (14) and which is preferably provided on the handle (16).

13. Lawnmower according to any one of the preceding claims, characterized in that an indicating member (42) of an indicating device (15) is drive-connected via a stepping mechanism (44) to the adjusting device (14) particularly in such a way that for each complete rotation of the driving control member (45) at least one operating step of the indicating member (42) is provided and preferably over the entire control path there is a maximum of one complete rotation.

14. Lawnmower according to any one of the preceding claims, characterized in that an indicating member (42) has a tooth system (46) located in the rotation path of at least one dog (47) of a setting handle (16) and preferably substantially is only free in the vicinity of a window-like indicating panel (49) adjacent to the setting handle (16).

## Claims (Claims for the following Contracting State(s): DE, FR)

1. Lawnmower with a chassis (2), a receptacle for a mowing tool, at least one adjusting device (14) for the mutual adjustment of at least one control part (21,22) of the chassis and the receptacle with at least one setting handle (16), between which and the control part (21,22) is provided a control drive, which has two elongated transmission members (20,37), characterized in that the two transmission members (20,37) are positioned in such a way that they are tensile-loaded as a reaction to the forces exerted by the lawnmower weight on the chassis.

2. Lawnmower according to claim 1, characterized in that the chassis (2) on the one hand has one mowing tool drive (3), such as a vertical mowing shaft (5), and on the other for movable ground support at least one roller (6,7), such as wheels (8,9), that the adjusting device (14) is a height adjusting device (14) for the reciprocal adjustment of the mowing tool drive (3) acting on at least one control part (21, 22) constructed as adjustment carriers and at least one roller (6,7) over a control path with at least one setting handle (16) and that preferably at least one height indicating device (15) coupled with the height adjusting device (14) is provided and which in particular has an indicating member (42) rotating with the height adjusting device (14).

3. Lawnmower according to claim 1 or 2, characterized in that between a control part (21,22) and a setting handle (16) and in particular closer to the latter is provided at least one single-stage reduction gear (17), that preferably one gear stage (18) of the reduction gear (17) has meshing gear members (28,29) rotatably mounted against one another and whereof in particular at least one is provided with a gear pitch helix (30,31) and that preferably one gear stage (18) of the reduction gear (17) has a spindle drive, particularly a threaded spindle drive with gear members (28,29) coaxial to one another and/or to the handle (16).

4. Lawnmower according to any one of the preceding claims, characterized in that a gear stage (18) of a reduction gear (17) of an adjusting device (14) has a piston-like gear member (29) axially movable in a cylinder-like gear member (28) and that the gear members (28,29) interengage in particular with an internal and an external thread and preferably the reduction gear (17) only has a single gear stage (18) with meshing gear members (28,29), which is in particular drive-connected via a single-stage rod drive (19) with at least one control part (21) and which preferably has the transmission member (37) as the tension rod.

5. Lawnmower according to any one of the preceding claims, characterized in that at least one end of the control path of an adjusting device is limited by direct, reciprocal stop limitation of gear members (28,29) of a gear stage (18) of a reduction gear (17) and preferably a frontal stop (40) of a gear member (29) towards the end of the control path is in the rotation path of a counterstop (41) of the other gear member (28).

6. Lawnmower according to any one of the preceding claims, characterized in that a driving gear member (28) of a gear stage (18) of a reduction gear (17) of an adjusting device (14) is directly connected to the setting handle (16) in a substantially rigid manner with respect to its gear movement, that in particular a sleeve-like gear member (28) carries at one end a rotary head (36) and/or a counterstop (41) and in the vicinity of the other end and accompanied by the formation of an axial stop for an inner, driven gear member (29) has a passage for a gear connection, more particularly formed by the transmission member (37), of said driven gear member (29) with the control part (21,22).

7. Lawnmower according to any one of the preceding claims, characterized in that a driven gear member (29) of a gear stage (18) of a reduction gear (17) of an adjusting device (14) is connected to a control part (21,22) by means of a gear connection at least partly constructed as a rod drive (19) and preferably an inner gear member (29) carries in the manner of a connecting rod and in articulated manner a tension rod (37) forming the transmission member and which spaced from the gear stage (18) is directly drive-connected to a support shaft (25).

8. Lawnmower according to any one of the preceding claims, characterized in that at least one control part (21,22) is pivotably mounted on an arcuate path and in particular at least one control part (21,22) is directly placed on at least one support shaft (25), that preferably there are spaced control parts (21,22) pivotable about an axially parallel or equiaxial control part bearings (23,24) and that in particular control parts (21,22) mounted in separate control part bearings (23,24) are interconnected by means of a transmission drive (20) formed by an intermediate rod or the like.

9. Lawnmower according to any one of the preceding claims, characterized in that at least one ground support of the lawnmower is mounted in vertically adjustable manner with respect to the chassis (2), that in particular two control part bearings (23,24) are provided in succeeding manner in the running direction and which are essentially located below wheel axles (10,11) of the ground support and are interconnected by means of a transmission drive (20) positioned laterally of the mowing tool drive (3) and approximately parallel to the running plane and are connected by means of the substantially vertical tension rod (37) to the gear stage (18) of the reduction gear (17).

10. Lawnmower according to any one of the preceding claims, characterized in that a setting handle (16) of an adjusting device (14), accessible from the top of the lawnmower (1), is substantially located on its top surface and in particular with a vertical rotation axis, approximately between articulated bearings (39) of the legs (13) of a bow-shaped steering handle (12) for the lawnmower (1).

11. Lawnmower according to any one of the preceding claims, characterized in that the indicating device (15), whilst obviating the transmission member (37), is driven substantially directly by the handle (16).

12. Lawnmower according to any one of the preceding claims, characterized in that an indicating member (42) of an indicating device (15), particularly an indicating disk provided over the circumference with height markings (43) is directly driven by a driving control member (45) of the adjusting device (14) and which is preferably provided on the handle (16).

13. Lawnmower according to any one of the preceding claims, characterized in that an indicating member (42) of an indicating device (15) is drive-connected via a stepping mechanism (44) to the adjusting device (14) particularly in such a way that for each complete rotation of the driving control member (45) at least one operating step of the indicating member (42) is provided and preferably over the entire control path there is a maximum of one complete rotation.

14. Lawnmower according to any one of the preceding claims, characterized in that an indicating member (42) has a tooth system (46) located in the rotation path of at least one dog (47) of a setting handle (16) and preferably substantially is only free in the vicinity of a window-like indicating panel (49) adjacent to the setting handle (16).

## Revendications (Revendications pour l'(les) Etat(s) contractant(s) suivant(s): AT, BE, CH, LI, ES, GB, IT, NL, SE)

1. Tondeuse à gazon composée d'un châssis (2), un logement pour une barre de coupe, au moins un dispositif de réglage (14) pour le réglage réciproque d'au moins un organe de commande (21, 22) du châssis et du logement avec au moins une manette de réglage (16), entre celle-ci et l'organe de commande (21, 22) étant prévue une commande de réglage qui présente au moins un organe de transmission (20, 37) allongé, caractérisée en ce qu'au moins un organe de transmission (20, 37) est disposé de sorte qu'il soit soumis à un effort de traction en réaction aux forces que le poids de la tondeuse exerce sur le châssis.

2. Tondeuse à gazon selon la revendication 1, caractérisée en ce que le châssis (2) présente, d'une part, un entraînement de la barre de coupe (3), comme, par exemple, un axe de coupe vertical (5) et, d'autre part, au moins un rotor (6, 7), comme des roues mobiles (8, 9) pour un appui mobile au sol, que le dispositif de réglage (14) est un dispositif de réglage de la hauteur (14) agissant sur au moins un organe de commande (21, 22) conçu comme un support de réglage pour le réglage réciproque de l'entraînement de la barre de coupe (3) et d'au moins un rotor (6, 7) sur une course de réglage à l'aide d'au moins une manette de réglage (16) et qu'est prévu de préférence au moins un indicateur de hauteur (15) couplé essentiellement avec le dispositif de réglage de la hauteur (14) qui présente en particulier un organe indicateur (42) suivant le dispositif de réglage de la hauteur (14).

3. Tondeuse à gazon selon la revendication 1 ou 2, caractérisée en ce qu'entre un organe de commande (21, 22) et une manette de réglage (16), en particulier plus près de cette dernière, est prévu un démultiplicateur (17) ayant au moins un étage que, de préférence, un étage (18) du démultiplicateur (17) présente des éléments de transmission (28, 29) en prise l'un dans l'autre et logés de manière à exercer une rotation réciproque, l'un d'entre eux au moins étant muni en particulier d'un filet hélicoïdal de transmission (30, 31) et que de préférence un étage (18) du démultiplicateur (17) présente une commande de broche, en particulier une commande de broche filetée avec des éléments de transmission (28, 29) situés coaxialement l'un par rapport à l'autre et/ou par rapport à la manette (16).

4. Tondeuse à gazon selon une des revendications précédentes, caractérisée en ce qu'un étage (18) d'un démultiplicateur (17) d'un dispositif de réglage (14) présente un élément de transmission (29) de type piston déplaçable axialement dans un engrenage de type cylindre (28) et que les éléments de transmission (28, 29) entrent en prise l'un dans l'autre, en particulier avec un filet externe et un filet interne, le démultiplicateur (17) ne présentant de préférence qu'un seul étage (18) avec des éléments de transmission (28, 29) en prise l'un dans l'autre qui sont reliés, de manière à être entraînés, à au moins un organe de commande (21) par l'intermédiaire d'une commande à bielle (19) à un seul étage présentant de préférence l'organe de transmission (37) comme bielle de traction.

5. Tondeuse à gazon selon une des revendications précédentes, caractérisée en ce qu'au moins une fin de la course de réglage d'un dispositif de réglage est limitée au moyen d'une limitation à butée réciproque directe par des éléments de transmission (28, 29) d'un étage (18) d'un démultiplicateur (17), une butée d'about (40) d'un élément de transmission (29) se trouvant de préférence contre la fin de la course de réglage dans la rotation d'une contre-butée (41) de l'autre élément de transmission (28).

6. Tondeuse à gazon selon une des revendications précédentes, caractérisée en ce qu'un élément de transmission propulseur (28) d'un étage (18) d'un démultiplicateur (17) d'un dispositif de réglage (14) est fixé directement et en particulier quant à son mouvement de transmission de manière essentiellement rigide avec la manette de réglage (16), qu'en particulier un élément de transmission (28) en forme de manchon porte à une extrémité un bouton tournant (36) et/ou une contre-butée (41) et, dans la région de l'autre extrémité pour former une butée axiale pour un élément de transmission entraîné interne (29) présente un passage pour une fixation de transmission formée en particulier par l'organe de transmission (37) de cet élément de transmission entraîné (29) avec l'organe de commande (21, 22).

7. Tondeuse à gazon selon une des revendications précédentes, caractérisée en ce qu'un élément de transmission entraîné (29) d'un étage (18) d'un démultiplicateur (17) d'un dispositif de réglage (14) est relié à un organe de commande (21, 22) par l'intermédiaire d'une fixation de transmission conçue au moins partiellement comme commande de bielle (19), un élément de transmission (29) interne portant de préférence, de manière articulée, une bielle de traction (37) formant l'organe de transmission à la façon d'une bielle motrice, qui est fixée directement de manière à être entraînée à un arbre porteur (25) à distance de l'étage (18) de transmission.

8. Tondeuse à gazon selon une des revendications précédentes, caractérisée en ce qu'au moins un organe de commande (21, 22) est logé de manière à pouvoir pivoter sur un arc et en particulier au moins un organe de commande (21, 22) est disposé directement sur au moins un arbre porteur (25), que des organes de commande (21, 22) sont prévus de préférence espacés et pivotables essentiellement autour de logements d'organe de commande (23, 24) ayant des axes identiques ou parallèles et que des organes de commande (21, 22) logés en particulier dans des logements séparés d'organe de commande (23, 24) sont respectivement fixés l'un à l'autre par l'intermédiaire d'une commande de transmission (20) formée par un bielle intermédiaire ou autre.

9. Tondeuse à gazon selon une des revendications précédentes, caractérisée en ce qu'au moins un appui au sol de la tondeuse à gazon est logé de manière réglable en hauteur par rapport au châssis (2), qu'en particulier deux logements d'organe de commande (23, 24) successifs dans le sens de roulement sont prévus, se trouvent essentiellement sous les axes de roue (10, 11) de l'appui au sol et sont fixés l'un à l'autre par l'intermédiaire d'un entraînement de transmission (20) situé latéralement à proximité de l'entraînement de barre de coupe (3) parallèlement au sens de roulement ainsi qu'à l'étage (18) du démultiplicateur (17) par l'intermédiaire d'un organe de traction (37) essentiellement vertical.

10. Tondeuse à gazon selon une des revendications précédentes caractérisée en ce qu'une manette de réglage (16) d'un dispositif de réglage (14) est accessible par le dessus de la tondeuse (1), essentiellement sur sa face supérieure, en particulier avec un axe de rotation vertical, et est située entre les paliers d'articulation (39) des côtés (13) d'une poignée destinée à l'opérateur (12) en forme d'étrier pour la tondeuse (1).

11. Tondeuse à gazon selon une des revendications précédentes, caractérisée en ce que le dispositif indicateur (15) est entraîné de manière essentiellement directe par la manette (16) en contournant l'organe de transmission (37).

12. Tondeuse à gazon selon une des revendications précédentes, caractérisée en ce qu'un organe indicateur (42) d'un dispositif indicateur (15), en particulier un disque indicateur pourvu à sa circonférence d'indications de hauteur (43), est entraîné directement par un organe de commande (45) propulseur du dispositif de réglage (14) qui est prévu de préférence sur la manette (16).

13. Tondeuse à gazon selon une des revendications précédentes, caractérisée en ce qu'un organe indicateur (42) d'un dispositif indicateur (15) est fixé de manière à être entraîné
au dispositif de réglage (14) par l'intermédiaire d'un mécanisme pas à pas (44), en particulier de telle sorte qu'en cas de rotation complète de l'organe de commande propulseur (45) au moins un pas de l'organe indicateur (42) est prévu et exécute de préférence au plus un tour complet sur toute la course de réglage.

14. Tondeuse à gazon selon une des revendications précédentes, caractérisée en ce qu'un organe indicateur (42) présente une denture (46) située dans la course de rotation d'au moins un entraîneur (47) d'une manette de réglage (16) et se situe librement à proximité de la manette de réglage (16) de préférence essentiellement dans la seule région d'une zone indicatrice (49) en forme de fenêtre.

## Revendications (Revendications pour l'(les) Etat(s) contractant(s) suivant(s): DE, FR)

1. Tondeuse à gazon composée d'un châssis (2), un logement pour une barre de coupe, au moins un dispositif de réglage (14) pour le réglage réciproque d'au moins un organe de commande (21, 22) du châssis et du logement avec au moins une manette de réglage (16), entre celle-ci et l'organe de commande (21, 22) étant prévue une commande de réglage qui présente deux organes de transmission (20, 37) allongés, caractérisée en ce que les deux organes de transmission (20, 37) sont disposés de sorte qu'ils soient soumis à un effort de traction en réaction aux forces que le poids de la tondeuse exerce sur le châssis.

2. Tondeuse à gazon selon la revendication 1, caractérisée en ce que le châssis (2) présente, d'une part, un entraînement de la barre de coupe (3), comme, par exemple, un axe de coupe vertical (5) et, d'autre part, au moins un rotor (6, 7), comme des roues mobiles (8, 9) pour un appui mobile au sol, que le dispositif de réglage (14) est un dispositif de réglage de la hauteur (14) agissant sur au moins un organe de commande (21, 22) conçu comme un support de réglage pour le réglage réciproque de l'entraînement de la barre de coupe (3) et d'au moins un rotor (6, 7) sur une course de réglage à l'aide d'au moins une manette de réglage (16) et qu'est prévu de préférence au moins un indicateur de hauteur (15) couplé essentiellement avec le dispositif de réglage de la hauteur (14) qui présente en particulier un organe indicateur (42) suivant le dispositif de réglage de la hauteur (14).

3. Tondeuse à gazon selon la revendication 1 ou 2, caractérisée en ce qu'entre un organe de commande (21, 22) et une manette de réglage (16), en particulier plus près de cette dernière, est prévu un démultiplicateur (17) ayant au moins un étage, que, de préférence, un étage (18) du démultiplicateur (17) présente des éléments de transmission (28, 29) en prise l'un dans l'autre et logés de manière à exercer une rotation réciproque, l'un d'entre eux au moins étant muni en particulier d'un filet hélicoïdal de transmission (30, 31) et que de préférence un étage (18) du démultiplicateur (17) présente une commande de broche, en particulier une commande de broche filetée avec des éléments de transmission (28, 29) situés coaxialement l'un par rapport à l'autre et/ou par rapport à la manette (16).

4. Tondeuse à gazon selon une des revendications précédentes, caractérisée en ce qu'un étage (18) d'un démultiplicateur (17) d'un dispositif de réglage (14) présente un élément de transmission (29) de type piston déplaçable axialement dans un engrenage de type cylindre (28) et que les éléments de transmission (28, 29) entrent en prise l'un dans l'autre, en particulier avec un filet externe et un filet interne, le démultiplicateur (17) ne présentant de préférence qu'un seul étage (18) avec des éléments de transmission (28, 29) en prise l'un dans l'autre qui sont reliés, de manière à être entraînés, à au moins un organe de commande (21) par l'intermédiaire d'une commande à bielle (19) à un seul étage présentant de préférence l'organe de transmission (37) comme bielle de traction.

5. Tondeuse à gazon selon une des revendications précédentes, caractérisée en ce qu'au moins une fin de la course de réglage d'un dispositif de réglage est limitée au moyen d'une limitation à butée réciproque directe par des éléments de transmission (28, 29) d'un étage (18) d'un démultiplicateur (17), une butée d'about (40) d'un élément de transmission (29) se trouvant de préférence contre la fin de la course de réglage dans la rotation d'une contre-butée (41) de l'autre élément de transmission (28).

6. Tondeuse à gazon selon une des revendications précédentes, caractérisée en ce qu'un élément de transmission propulseur (28) d'un étage (18) d'un démultiplicateur (17) d'un dispositif de réglage (14) est fixé directement et en particulier quant à son mouvement de transmission de manière essentiellement rigide avec la manette de réglage (16), qu'en particulier un élément de transmission (28) en forme de manchon porte à une extrémité un bouton tournant (36) et/ou une contre-butée (41) et, dans la région de l'autre extrémité pour former une butée axiale pour un élément de transmission entraîné interne (29) présente un passage pour une fixation de transmission formée en particulier par l'organe de transmission (37) de cet élément de transmission entraîné (29) avec l'organe de commande (21, 22).

7. Tondeuse à gazon selon une des revendications précédentes, caractérisée en ce qu'un élément de transmission entraîné (29) d'un étage (18) d'un démultiplicateur (17) d'un dispositif de réglage (14) est relié à un organe de commande (21, 22) par l'intermédiaire d'une fixation de transmission conçue au moins partiellement comme commande de bielle (19), un élément de transmission (29) interne portant de préférence, de manière articulée, une bielle de traction (37) formant l'organe de transmission à la façon d'une bielle motrice, qui est fixée directement de manière à être entraînée à un arbre porteur (25) à distance de l'étage (18) de transmission.

8. Tondeuse à gazon selon une des revendications précédentes, caractérisée en ce qu'au moins un organe de commande (21, 22) est logé de manière à pouvoir pivoter sur un arc et en particulier au moins un organe de commande (21, 22) est disposé directement sur au moins un arbre porteur (25), que des organes de commande (21, 22) sont prévus de préférence espacés et pivotables essentiellement autour de logements d'organe de commande (23, 24) ayant des axes identiques ou parallèles et que des organes de commande (21, 22) logés en particulier dans des logements séparés d'organe de commande (23, 24) sont respectivement fixés l'un à l'autre par l'intermédiaire d'une commande de transmission (20) formée par un bielle intermédiaire ou autre.

9. Tondeuse à gazon selon une des revendications précédentes, caractérisée en ce qu'au moins un appui au sol de la tondeuse à gazon est logé de manière réglable en hauteur par rapport au châssis (2), qu'en particulier deux logements d'organe de commande (23, 24) successifs dans le sens de roulement sont prévus, se trouvent essentiellement sous les axes de roue (10, 11) de l'appui au sol et sont fixés l'un à l'autre par l'intermédiaire d'un entraînement de transmission (20) situé latéralement à proximité de l'entraînement de barre de coupe (3) parallèlement au sens de roulement ainsi qu'à l'étage (18) du démultiplicateur (17) par l'intermédiaire d'un organe de traction (37) essentiellement vertical.

10. Tondeuse à gazon selon une des revendications précédentes caractérisée en ce qu'une manette de réglage (16) d'un dispositif de réglage (14) est accessible par le dessus de la tondeuse (1), essentiellement sur sa face supérieure, en particulier avec un axe de rotation vertical, et est située entre les paliers d'articulation (39) des côtés (13) d'une poignée destinée à l'opérateur (12) en forme d'étrier pour la tondeuse (1).

11. Tondeuse à gazon selon une des revendications précédentes, caractérisée en ce que le dispositif indicateur (15) est entraîné de manière essentiellement directe par la manette (16) en contournant l'organe de transmission (37).

12. Tondeuse à gazon selon une des revendications précédentes, caractérisée en ce qu'un organe indicateur (42) d'un dispositif indicateur (15), en particulier un disque indicateur pourvu à sa circonférence d'indications de hauteur (43), est entraîné directement par un organe de commande (45) propulseur du dispositif de réglage (14) qui est prévu de préférence sur la manette (16).

13. Tondeuse à gazon selon une des revendications précédentes, caractérisée en ce qu'un organe indicateur (42) d'un dispositif indicateur (15) est fixé de manière à être entraîné
au dispositif de réglage (14) par l'intermédiaire d'un mécanisme pas à pas (44), en particulier de telle sorte qu'en cas de rotation complète de l'organe de commande propulseur (45) au moins un pas de l'organe indicateur (42) est prévu et exécute de préférence au plus un tour complet sur toute la course de réglage.

14. Tondeuse à gazon selon une des revendications précédentes, caractérisée en ce qu'un organe indicateur (42) présente une denture (46) située dans la course de rotation d'au moins un entraîneur (47) d'une manette de réglage (16) et se situe librement à proximité de la manette de réglage (16) de préférence essentiellement dans la seule région d'une zone indicatrice (49) en forme de fenêtre.
